# FASCICULE DE BREVET EUROPEEN

(11) **EP 2 560 839 B1**
(45) Date de publication et mention de la délivrance du brevet: **10.02.2016**
(21) Numéro de dépôt: 11719298.9
(22) Date de dépôt: 25.03.2011
(51) Int. Cl.: B60J 5/04, B60R 13/04, B60R 19/44

(54) **PANNEAU DE PROTECTION DESTINE A ETRE FIXE SUR UNE PARTIE DE LA CARROSSERIE D'UN VEHICULE AUTOMOBILE ET VEHICULE EQUIPE D'UN TEL PANNEAU.**
SCHUTZPLATTE DER BEFESTIGBAR IST AUF DEM TEIL DES KÖRPERS EINES KRAFTFAHRZEUGES UND EIN FAHRZEUG AUSGESTATTET MIT EINEM SOLCHEN PANEL.
PROTECTION PANEL TO BE FIXED ON A PART OF THE BODY OF A MOTOR VEHICLE AND VEHICLE EQUIPPED WITH SUCH A PANEL.

(30) Priorité: 23.04.2010 FR 1053128
(43) Date de publication de la demande: 27.02.2013
(73) Titulaire: Peugeot Citroën Automobiles SA, 78140 Vélizy Villacoublay (FR)
(72) Inventeur: DUVERNIER, Frédéric, F-91190 Villiers Le Bacle (FR); DELALANDE, Stéphane, F-91310 Longpont Sur Orge (FR); MESARIC, Stéphane, F-92350 Le Plessis Robinson (FR); LLOYD, Mark, F-78000 Versailles (FR); CARFANTAN, Maurice, F-92140 Clamart (FR)
(74) Mandataire: Fernandez, Francis Lionel
(86) Numéro de dépôt international: PCT/FR2011/050650
(87) Numéro de publication internationale: WO 2011/131877

(56) Documents cités:
- GB-A- 2 257 391
- US-A- 5 188 408
- US-A- 5 281 292

## Description

La présente invention concerne un panneau de protection destiné à être fixé sur une partie de la carrosserie d'un véhicule.

L'invention concerne également un véhicule automobile équipé d'un ou plusieurs panneaux de protection.

Les portes latérales des véhicules automobiles sont souvent équipées de baguettes de protection qui sont censées protéger ces portes à l'égard de petits chocs urbains, tels que les chocs de portes latérales, et de caddies.

Du fait de leur faible largeur, ces baguettes ont une fonction de protection qui est très réduite.

Certains véhicules sont équipés de bandeaux latéraux présentant une grande largeur.

Ces bandeaux sont en matière plastique rigide et ne présentent ainsi pas la capacité de se déformer sous l'effet d'un petit choc urbain.

Ils présentent tout au plus l'avantage qu'en cas d'éraflures, ils évitent d'avoir à repeindre la totalité d'une porte ou d'une aile du véhicule.

Le brevet US 4 411 938 décrit un panneau de protection en matière plastique souple qui est collé sur la carrosserie d'un véhicule automobile.

La protection conférée par un tel panneau souple est réduite étant donné que le panneau est en contact avec la carrosserie et de ce fait n'évite pas la déformation de celle-ci en cas de choc un peu violent. Le document GB 2257391A décrit un panneau de protection selon le préambule de la revendication 1.

Le but de la présente invention est de remédier aux inconvénients ci-dessus.

Ce but est atteint, selon l'invention, grâce à un panneau de protection en matière plastique destiné à être fixé sur une partie de la carrosserie d'un véhicule automobile, caractérisé en ce qu'il comprend une paroi en matière plastique rigide et une paroi en matière plastique souple, ces deux parois étant en contact l'une avec l'autre dans des zones qui entourent des zones dans lesquelles ces deux parois sont espacées l'une de l'autre, la paroi en matière plastique rigide comportant sur l'une de ses faces des moyens de fixation pour fixer celle-ci à ladite partie de la carrosserie et la paroi en matière souple recouvrant l'autre face de la paroi en matière rigide.

Les zones dans lesquelles la paroi en matière plastique souple est espacée de la paroi en matière plastique rigide sont déformables en cas de choc de type urbain.

Lors d'un tel choc, la paroi souple se rapproche de la paroi rigide, sans être endommagée, ni même éraflée.

De plus, ces zones peuvent être réparties sur le panneau de protection de façon à former un motif esthétique.

Dans une version préférée de l'invention, les zones dans lesquelles les deux parois sont espacées l'une de l'autre occupent une surface plus importante que les zones dans lesquelles les deux parois sont en contact l'une avec l'autre.

Ainsi, une partie prépondérante de la surface du panneau est déformable en cas de choc, ce qui lui confère une capacité optimale de protection.

Dans un premier mode de réalisation, dans les zones dans lesquelles les deux parois sont espacées, ces deux parois définissent entre elles des alvéoles qui sont remplies d'air.

Dans un second mode de réalisation, dans les zones dans lesquelles les deux parois sont espacées, ces deux parois définissent entre elles des alvéoles qui sont remplies d'une matière souple.

Cette matière souple peut être un gel ou une mousse.

De préférence, dans les zones dans lesquelles les deux parois sont en contact l'une avec l'autre, ces deux parois sont soudées ou collées l'une à l'autre.

De préférence également, à la périphérie du panneau, la paroi en matière plastique souple est soudée ou collée à la paroi en matière plastique rigide.

Dans un mode de réalisation avantageux de l'invention, le bord périphérique de la paroi en matière plastique souple déborde par rapport au bord périphérique de la paroi en matière plastique rigide pour constituer une lèvre souple destinée à venir en appui sur ladite partie de la carrosserie du véhicule.

Cette disposition permet d'obtenir une liaison étanche entre le panneau selon l'invention et la carrosserie.

Dans une version préférée de l'invention, dans les zones dans lesquelles les deux parois sont espacées, la paroi en matière plastique souple présente une surface convexe dirigée vers l'extérieur.

Cette surface convexe permet d'obtenir une protection particulièrement efficace à l'égard des chocs.

Dans cette version, la paroi en matière plastique rigide présente de préférence une surface convexe orientée dans une direction opposée à celle de la paroi en matière plastique souple.

Cette disposition permet d'augmenter le volume de chacune des alvéoles définies entre les deux parois du panneau et de ce fait la protection de celui-ci à l'égard des chocs.

De préférence également, la face de la paroi en matière plastique rigide opposée à celle recouverte par la paroi en matière souple comporte des nervures de renforcement.

Ces nervures augmentent la rigidité de la paroi en matière plastique rigide.

Selon un autre aspect, l'invention concerne également un véhicule automobile comportant au moins un panneau de protection selon l'invention fixé sur une partie de sa carrosserie qui est exposée à des chocs.

De préférence, ledit panneau de protection est fixé sur une partie de la carrosserie qui comporte au moins un ajour.

Cet ajour permet d'alléger la partie de la carrosserie sur laquelle le panneau de protection est fixé.

Dans une version préférée de l'invention, ledit panneau de protection est fixé sur chacune des portes latérales du véhicule.

Ce panneau de protection peut également être fixé sur l'avant et/ou l'arrière du véhicule.

D'autres particularités et avantages de l'invention apparaîtront encore tout au long de la description ci-après.

Aux dessins annexés, donnés à titre d'exemples, non limitatifs :
- la figure 1 est une vue en perspective partielle d'une porte latérale de véhicule automobile équipée d'un panneau de protection selon l'invention,
- la figure 2 est une vue analogue à la figure 1 montrant la porte avant fixation du panneau de protection,
- la figure 3 est une vue en perspective et en coupe suivant le plan III-III de la figure 1, montrant partiellement la face intérieure du panneau de protection et la peau extérieure de la porte,
- la figure 4 montre uniquement la vue en coupe suivant le plan III-III de la figure 1,
- la figure 5 est une vue en perspective partielle montrant un panneau selon l'invention fixé à l'avant d'un véhicule automobile,
- la figure 6 est une vue en perspective partielle montrant un panneau selon l'invention fixé sur l'arrière d'un véhicule automobile.

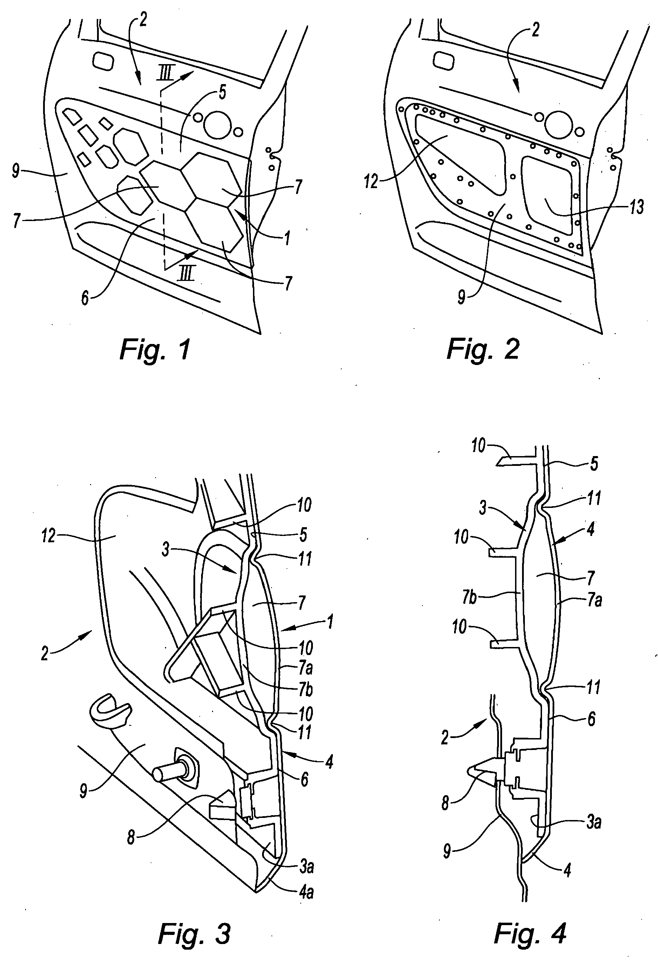

Les figures 1 à 4 représentent un panneau de protection en matière plastique 1 fixé sur une porte latérale 2 d'un véhicule automobile.

Ce panneau de protection 1 comprend (voir figures 3 et 4) une paroi intérieure 3 en matière plastique rigide et une paroi extérieure 4 en matière plastique souple.

Ces deux parois 3, 4 sont en contact l'une avec l'autre dans des zones 5, 6 qui entourent des zones 7 dans lesquelles ces deux parois 3, 4 sont espacées l'une de l'autre.

La paroi en matière plastique rigide 3 comporte sur sa face intérieure des moyens de fixation 8, tels que des agrafes, pour fixer celle-ci à la peau extérieure 9 de la porte 2.

La paroi 4 en matière souple recouvre la face extérieure de la paroi 3 en matière rigide.

La figure 1 montre que les zones 7 dans lesquelles les deux parois 3, 4 sont espacées l'une de l'autre occupent une surface plus importante que les zones 5, 6 dans lesquelles les deux parois 3, 4 sont en contact l'une avec l'autre.

La paroi 3 en matière plastique rigide peut être en ABS (acrylonitrile, butadiène styrène), PC (polycarbonate), PP (polypropylène) ou analogues.

La paroi 4 en matière plastique souple peut être en élastomère, tel que EPDM, TPU, TPE, ou SEBS.

Dans les zones 7 dans lesquelles les deux parois 3, 4 sont espacées, ces deux parois 3, 4 définissent entre elles des alvéoles qui peuvent être remplies d'air, ou d'une matière souple, telle qu'un gel ou une mousse.

Les alvéoles ainsi remplies sont capables d'amortir de petits chocs urbains.

Par ailleurs, dans les zones 5, 6 dans lesquelles les deux parois 3, 4 sont en contact l'une avec l'autre, ces deux parois 3, 4 sont soudées ou collées l'une à l'autre.

De plus, à la périphérie du panneau 1, la paroi 4 en matière plastique souple est soudée ou collée à la paroi 3 en matière plastique rigide.

Comme montré sur les figures 3 et 4, le bord périphérique 4a de la paroi 4 en matière plastique souple déborde par rapport au bord périphérique 3a de la paroi 3 en matière plastique rigide pour constituer une lèvre souple venant en appui sur la peau extérieure 9 de la porte du véhicule, ce qui permet de réaliser l'étanchéité entre le panneau 1 et la porte 2.

Les figures 3 et 4 montrent également que dans les zones 7 dans lesquelles les deux parois 3, 4 sont espacées, la paroi 4 en matière plastique souple présente une surface convexe 7a dirigée vers l'extérieur qui fait légèrement saillie par rapport au reste du panneau 1.

Par ailleurs, la paroi 3 en matière plastique rigide présente une surface convexe 7b orientée dans une direction opposée à celle de la paroi 4 en matière plastique souple.

De plus, la face intérieure de la paroi 3 en matière plastique rigide qui est opposée à celle recouverte par la paroi 4 en matière souple comporte des nervures de renforcement 10.

Dans l'exemple montré sur les figures 1, 3 et 4 dans les zones 7 dans lesquelles les parois 3, 4 sont espacées, la paroi souple 4 comporte une gorge 11 qui entoure chaque zone 7 et qui est en appui contre la paroi rigide 3.

Ces zones 7 peuvent avoir des formes diverses pour définir un motif esthétique.

Dans le cas illustré par la figure 1, les zones 7 ont une forme hexagonale qui permet une répartition en nids d'abeille et présente l'avantage de minimiser la surface des zones de liaison entre les zones 7.

Ainsi, l'essentiel de la surface extérieure du panneau 1 est constituée par des zones 7 capables d'amortir des petits chocs urbains sans endommager ni le panneau 1, ni la porte 2.

De plus, dans une telle répartition des zones 7, il n'existe pas de lignes de liaison droites dans le sens de la longueur ou de la hauteur du panneau 1 susceptibles de constituer des lignes de flexion du panneau.

Dans l'exemple montré sur la figure 2, la partie de la peau extérieure 9 de la porte 2 qui est destinée à être recouverte par le panneau de protection comporte des ajours 12, 13 qui permettent de réduire la masse de la porte en tôle d'acier.

Compte tenu de ces ajours 12, 13, l'ajout du panneau 1 à la porte 2 n'augmente pas la masse de celle-ci, mais au contraire la diminue, étant donné la densité relativement faible de la matière plastique par rapport à celle de l'acier.

Le panneau selon l'invention peut être fixé sur toute autre partie exposée aux chocs que les portes latérales d'un véhicule automobile.

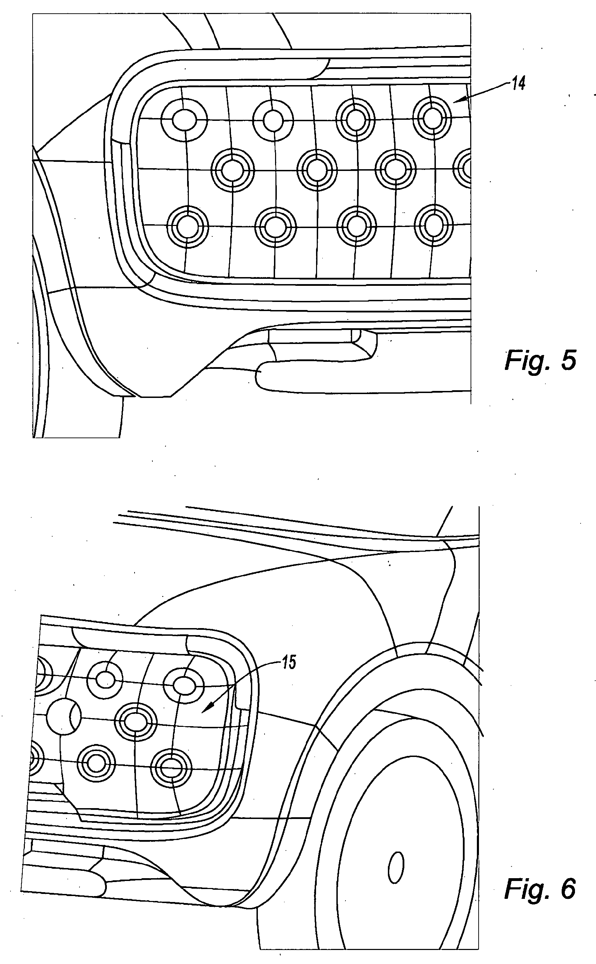

Ainsi, les figures 5 et 6 montrent des panneaux de protection 14, 15 fixés à l'arrière ou à l'avant d'un véhicule automobile.

Ces panneaux 14, 15 s'étendent sur pratiquement toute la largeur du véhicule et sont en partie intégrés dans le pare-choc et les deux ailes.

Ces panneaux 14, 15 présentent la même structure que le panneau 1 fixé sur une porte latérale décrit plus haut.

## Revendications

1. Panneau de protection (1, 14, 15) en matière plastique destiné à être fixé sur une partie (2) de la carrosserie d'un véhicule automobile, **caractérisé en ce qu'**il comprend une paroi (3) en matière plastique rigide et une paroi (4) en matière plastique souple, ces deux parois (3, 4) étant en contact l'une avec l'autre dans des zones (5, 6) qui entourent des zones (7) dans lesquelles ces deux parois (3, 4) sont espacées l'une de l'autre et définissent entre elles des alvéoles (7), lesdites zones (7) étant déformables, ladite paroi souple (4) se rapprochant de ladite paroi rigide (3) en cas de choc de type urbain, la paroi (3) en matière plastique rigide comportant sur l'une de ses faces des moyens de fixation (8) pour fixer celle-ci à ladite partie (2) de la carrosserie et la paroi (4) en matière souple recouvrant l'autre face de la paroi (3) en matière rigide.

2. Panneau de protection selon la revendication 1, **caractérisé en ce que** les zones (7) dans lesquelles les deux parois (3, 4) sont espacées l'une de l'autre occupent une surface plus importante que les zones (5, 6) dans lesquelles les deux parois (3, 4) sont en contact l'une avec l'autre.

3. Panneau de protection selon l'une des revendications 1 ou 2, **caractérisé en ce que** dans les zones (7) dans lesquelles les deux parois (3, 4) sont espacées, ces deux parois (3, 4) définissent entre elles des alvéoles qui sont remplies d'air.

4. Panneau de protection selon l'une des revendications 1 ou 2, **caractérisé en ce que** dans les zones (7) dans lesquelles les deux parois (3, 4) sont espacées, ces deux parois (3, 4) définissent entre elles des alvéoles qui sont remplies d'une matière souple.

5. Panneau de protection selon l'une des revendications 1 à 4, **caractérisé en ce que** dans les zones (5, 6) dans lesquelles les deux parois (3, 4) sont en contact l'une avec l'autre, ces deux parois (3, 4) sont soudées ou collées l'une à l'autre.

6. Panneau de protection selon l'une des revendications 1 à 5, **caractérisé en ce qu'**à la périphérie du panneau (1), la paroi (4) en matière plastique souple est soudée ou collée à la paroi (3) en matière plastique rigide.

7. Panneau de protection selon la revendication 6, **caractérisé en ce que** le bord périphérique (4a) de la paroi (4) en matière plastique souple déborde par rapport au bord périphérique (3a) de la paroi (3) en matière plastique rigide pour constituer une lèvre souple destinée à venir en appui sur ladite partie (2) de la carrosserie du véhicule.

8. Panneau de protection selon l'une des revendications 1 à 7, **caractérisé en ce que** dans les zones (7) dans lesquelles les deux parois (3, 4) sont espacées, la paroi (4) en matière plastique souple présente une surface convexe (7a) dirigée vers l'extérieur.

9. Panneau de protection selon la revendication 8, **caractérisé en ce que** la paroi (3) en matière plastique rigide présente une surface convexe (7b) orientée dans une direction opposée à celle de la paroi (4) en matière plastique souple.

10. Panneau de protection selon l'une des revendications 1 à 9, **caractérisé en ce que** la face de la paroi en matière plastique rigide (3) opposée à celle recouverte par la paroi en matière souple (4) comporte des nervures de renforcement (10).

11. Véhicule automobile comportant au moins un panneau de protection (1, 14, 15) selon l'une des revendications 1 à 10 fixé sur une partie (2) de sa carrosserie qui est exposée à des chocs.

12. Véhicule automobile selon la revendication 11, **caractérisé en ce que** ledit panneau de protection (1) est fixé sur une partie (2) de la carrosserie qui comporte au moins un ajour (12, 13).

13. Véhicule automobile selon l'une des revendications 11 ou 12, **caractérisé en ce que** ledit panneau de protection (1) est fixé sur chacune des portes latérales (2) du véhicule.

14. Véhicule automobile selon l'une des revendications 11 ou 12, **caractérisé en ce que** ledit panneau de protection (14, 15) est fixé sur l'avant et/ou l'arrière du véhicule.

## Patentansprüche

1. Schutzplatte (1, 14, 15) aus Kunststoffmaterial, die zur Befestigung auf einem Teil (2) der Karosserie eines Kraftfahrzeugs bestimmt ist, **dadurch gekennzeichnet, dass** sie eine Wand (3) aus starrem Kunststoffmaterial und eine Wand (4) aus elastischem Kunststoffmaterial umfasst, wobei diese zwei Wände (3, 4) in Zonen (5, 6) miteinander im Kontakt sind, die Zonen (7) umgeben, in welchen diese zwei Wände (3, 4) voneinander beabstandet sind und zwischen sich Waben (7) definieren, wobei die Zonen (7) verformbar sind, wobei sich die elastische Wand (4) bei einem Stoß vom urbanen Typ an die starre Wand (3) annähert, wobei die Wand (3) aus starrem Kunststoffmaterial auf einer ihrer Flächen Befestigungsmittel (8) zu ihrer Befestigung auf dem Teil (2) der Karosserie aufweist und die Wand (4) aus elastischem Material die andere Fläche der Wand (3) aus starrem Material bedeckt.

2. Schutzplatte nach Anspruch 1, **dadurch gekennzeichnet, dass** die Zonen (7), in welchen die zwei Wände (3, 4) voneinander beabstandet sind, eine größere Oberfläche belegen als die Zonen (5, 6), in denen die zwei Wände (3, 4) miteinander im Kontakt sind.

3. Schutzplatte nach einem der Ansprüche 1 oder 2, **dadurch gekennzeichnet, dass** in den Zonen (7), in welchen die zwei Wände (3, 4) beabstandet sind, diese zwei Wände (3, 4) zwischen sich mit Luft gefüllte Waben definieren.

4. Schutzplatte nach einem der Ansprüche 1 oder 2, **dadurch gekennzeichnet, dass** in den Zonen (7), in welchen die zwei Wände (3, 4) beabstandet sind, diese zwei Wände (3, 4) zwischen sich mit einem elastischen Material gefüllte Waben definieren.

5. Schutzplatte nach einem der Ansprüche 1 bis 4, **dadurch gekennzeichnet, dass** in den Zonen (5, 6), in welchen die zwei Wände (3, 4) miteinander im Kontakt sind, diese zwei Wände (3, 4) aneinander verschweißt oder verklebt sind.

6. Schutzplatte nach einem der Ansprüche 1 bis 5, **dadurch gekennzeichnet, dass** die Wand (4) aus elastischem Kunststoffmaterial am Umfang der Platte (1) auf der Wand (3) aus starrem Kunststoffmaterial verschweißt oder verklebt ist.

7. Schutzplatte nach Anspruch 6, **dadurch gekennzeichnet, dass** der Umfangsrand (4a) der Wand (4) aus elastischem Kunststoffmaterial im Verhältnis zum Umfangsrand (3a) der Wand (3) aus starrem Kunststoffmaterial übersteht, um eine elastische Lippe zu bilden, die zur Abstützung auf dem Teil (2) der Karosserie des Fahrzeugs bestimmt ist.

8. Schutzplatte nach einem der Ansprüche 1 bis 7, **dadurch gekennzeichnet, dass** in den Zonen (7), in welchen die zwei Wände (3, 4) beabstandet sind, die Wand (4) aus elastischem Kunststoffmaterial eine konvexe Oberfläche (7a) aufweist, die nach außen gerichtet ist.

9. Schutzplatte nach Anspruch 8, **dadurch gekennzeichnet, dass** die Wand (3) aus starrem Kunststoffmaterial eine konvexe Oberfläche (7b) aufweist, die in eine Richtung gerichtet ist, die zu der der Wand (4) aus elastischem Kunststoffmaterial entgegengesetzt ist.

10. Schutzplatte nach einem der Ansprüche 1 bis 9, **dadurch gekennzeichnet, dass** die Fläche der Wand aus starrem Kunststoffmaterial (3), die der gegengenüberliegt, die von der Wand aus elastischem Material (4) bedeckt ist, Verstärkungsrippen (10) aufweist.

11. Kraftfahrzeug, das mindestens eine Schutzplatte (1, 14, 15) nach einem der Ansprüche 1 bis 10 aufweist, die auf einem Teil (2) seiner Karosserie befestigt ist, die Stößen ausgesetzt ist.

12. Kraftfahrzeug nach Anspruch 11, **dadurch gekennzeichnet, dass** die Schutzplatte (1) auf einem Teil (2) der Karosserie befestigt ist, das mindestens einen Durchbruch (12, 13) aufweist.

13. Kraftfahrzeug nach einem der Ansprüche 11 oder 12, **dadurch gekennzeichnet, dass** die Schutzplatte (1) auf jeder der Seitentüren (2) des Fahrzeugs befestigt ist.

14. Kraftfahrzeug nach einem der Ansprüche 11 oder 12, **dadurch gekennzeichnet, dass** die Schutzplatte (14, 15) vorn und/oder am Heck des Fahrzeugs befestigt ist.

## Claims

1. Protective panel (1, 14, 15) made from a plastic material intended to be attached onto a portion (2) of the body of a motor vehicle, **characterised in that** it includes a wall (3) made from a rigid plastic material and a wall (4) made from a flexible plastic material, said two walls (3, 4) being in contact with one another in areas (5, 6) that surround areas (7) in which said two walls (3, 4) are spaced apart from one another and defining therebetween cells (7), said areas (7) being deformable, said flexible wall (4) moving closer to said rigid wall (3) in the event of an urban-type impact, the wall (3) made from a rigid plastic material comprising attachment means (8) on one of its sides, for attaching said wall to said portion (2) of the body and the wall (4) made from a flexible material covering the other side of the wall (3) made from a rigid material.

2. Protective panel according to claim 1, **characterised in that** the areas (7) wherein the two walls (3, 4) are spaced apart from one another occupy a larger surface area than the areas (5, 6) wherein the two walls (3, 4) are in contact with one another.

3. Protective panel according to one of claims 1 or 2, **characterised in that** in the areas (7) wherein the two walls (3, 4) are spaced apart from one another, said two walls (3, 4) define cells therebetween which are filled with air.

4. Protective panel according to one of claims 1 or 2, **characterised in that** in the areas (7) wherein the two walls (3, 4) are spaced apart from one another, said two walls (3, 4) define cells therebetween which are filled with a flexible material.

5. Protective panel according to one of claims 1 to 4, **characterised in that** in the areas (5, 6) wherein the two walls (3, 4) are in contact with one another, said two walls (3, 4) are welded or bonded with one another.

6. Protective panel according to one of claims 1 to 5, **characterised in that** at the periphery of the panel (1), the wall (4) made from a flexible plastic material is welded or bonded to the wall (3) made from a rigid plastic material.

7. Protective panel according to claim 6, **characterised in that** the peripheral edge (4a) of the wall (4) made from a flexible plastic material protrudes in relation to the peripheral edge (3a) of the wall (3) made from a rigid plastic material to form a flexible lip intended to rest against said portion (2) of the body of the vehicle.

8. Protective panel according to one of claims 1 to 7, **characterised in that** in the areas (7) wherein the two walls (3, 4) are spaced apart from one another, the wall (4) made from a flexible plastic material has a convex surface (7a) directed outwards.

9. Protective panel according to claim 8, **characterised in that** the wall (3) made from a rigid plastic material has a convex surface (7b) directed in a direction opposite that of the wall (4) made from a flexible plastic material.

10. Protective panel according to one of claims 1 to 9, **characterised in that** the side of the wall made from a rigid plastic material (3) opposite that covered by the wall made from a flexible plastic material (4) comprises stiffening ribs (10).

11. Motor vehicle comprising at least one protective panel (1, 14, 15) according to one of claims 1 to 10, attached onto a portion (2) of its body that is exposed to impacts.

12. Motor vehicle according to claim 11, **characterised in that** said protective panel (1) is attached onto a portion (2) of the body that comprises at least one hole (12, 13).

13. Motor vehicle according to one of claims 11 or 12, **characterised in that** said protective panel (1) is attached onto each of the side doors (2) of the vehicle.

14. Motor vehicle according to one of claims 11 or 12, **characterised in that** said protective panel (14, 15) is attached onto the front and/or rear of the vehicle.
